(19) **Europäisches Patentamt**
**European Patent Office**
**Office européen des brevets**

(11) Veröffentlichungsnummer: **0 342 437 B1**

# (12) EUROPÄISCHE PATENTSCHRIFT

(45) Veröffentlichungstag der Patentschrift:
18.09.91 Patentblatt 91/38

(51) Int. Cl.⁵: **A61C 1/10**

(21) Anmeldenummer: **89108058.2**

(22) Anmeldetag: **03.05.89**

(54) **Zahnärztliches Handstück mit Griffteil.**

(30) Priorität: **16.05.88 DE 3816612**

(43) Veröffentlichungstag der Anmeldung:
**23.11.89 Patentblatt 89/47**

(45) Bekanntmachung des Hinweises auf die
Patenterteilung:
**18.09.91 Patentblatt 91/38**

(84) Benannte Vertragsstaaten:
**AT CH DE FR IT LI**

(56) Entgegenhaltungen:
**EP-A- 0 017 861**
**DE-A- 3 002 875**
**DE-C- 682 545**

(73) Patentinhaber: **Siemens Aktiengesellschaft**
**Wittelsbacherplatz 2**
**W-8000 München 2 (DE)**

(72) Erfinder: **Bierbaum, Thomas, Dipl.-Ing.**
**Kriemhildenstrasse 15a**
**W-6143 Lorsch (DE)**
Erfinder: **Hain, Johann**
**Mühlwiesenweg 5**
**W-6148 Heppenheim (DE)**

EP 0 342 437 B1

# Beschreibung

Die Erfindung bezieht sich auf ein zahnärztliches Handstück, welches ein eine griffige Oberfläche aufweisendes Griffteil enthält.

Zahnärztliche Handstücke werden, von einigen Ausnahmen abgesehen, in der Regel nach Art eines Bleistiftes, also in Drei-Finger-Haltung, gehalten. Die Oberflächengestaltung spielt dabei im Bereich der Fingerhaltung, nachfolgend mit Griffbereich bezeichnet, eine besondere Rolle.

Einerseits gilt es aus hygienischen Gründen, insbesondere einer leichten Reinigung der Oberfläche des Handstückes wegen, anzustreben, daß das gesamte Handstück eine möglichst glatte Oberfläche aufweist, andererseits ist es notwendig, im Griffbereich eine ausreichende Griffigkeit zu haben, die es ermöglicht, daß das Handstück während einer Präparation ohne großen Fingerdruck sicher in der Hand liegt. Dies gilt sowohl gegen Drehen als auch gegen Längsgleiten unter dem Einfluß von axialen und radialen, auf den Bohrer wirkenden Kräften bei einer Präparation.

Um diese an sich gegensätzlichen Forderungen zu erfüllen, wurde bereits vorgeschlagen, im Griffbereich am Umfang des Handstückes mehrere, gleichmäßig verteilte, muldenförmige Abflachungen vorzusehen (EP-A-0017861). In dem Bestreben, den Herstellungsaufwand für die Oberflächengestaltung des Handstückes zu reduzieren, wurde weiterhin vorgeschlagen (EP-A-0054653), die Oberfläche des Handstückes im Griffbereich mit einer Trägerschicht für Körnungen einer bestimmten Korngröße zu versehen, wodurch das Handstück im Griffbereich eine bestimmte Rauhigkeit und damit Griffigkeit aufweist.

Obgleich man mit dieser Oberflächengestaltung eine gute Griffigkeit erhält, stellt sich, insbesondere unter der heute immer stärker erhobenen Forderung der Benutzung von Gummihandschuhen verstärkt das Problem bzw. die Frage, ob eine solche Oberfläche nicht zu griffig ist.

Der im Anspruch 1 angegebenen Erfindung liegt die Aufgabe zugrunde, eine Möglichkeit einer Oberflächengestaltung für den Griffbereich von zahnärztlichen Handstücken anzugeben, die fertigungstechnisch weniger aufwendig ist, die den Forderungen nach möglichst glatter, leicht zu reinigender Fläche noch näherkommt als die bisherigen Ausführungen, die dennoch aber eine ausreichende Griffigkeit im oben erwähnten Sinne beinhaltet.

Die erfindungsgemäß vorgeschlagenen Maßnahmen erlauben es, den Anteil an für die Griffigkeit notwendiger rauher Oberfläche erheblich zu reduzieren, ohne daß dadurch die Griffigkeit beeinträchtigt wird. Selbst wenn man die erfindungsgemäß vorgeschlagenen Linienzüge sehr dicht nebeneinander setzt, würde der Flächenanteil an rauher Oberfläche immer noch erheblich geringer sein als bei einem Handstück, dessen Oberfläche im Griffbereich nach der bekannten Beschichtungstechnik mit eingelagerten Körnern gestaltet ist. Weitere Vorteile der erfindungsgemäß vorgeschlagenen Maßnahmen sind, daß der Aufwand für die Oberflächengestaltung erheblich kostengünstiger ist als die bisher vorgesehenen Maßnahmen, und daß man mit diesem Verfahren gleichsam auch Beschriftungen am Handstück vorsehen kann. Die Linien können geschlossen oder unterbrochen, z.B. durch punktförmiges Aneinanderreihen gebildet sein. Sie können auch offene oder geschlossene Linienzüge bilden. Die Linien bzw. Linienzüge sind am Umfang des Handstückes so angebracht, daß bei der üblichen 3-Finger-Handhaltung die Finger stets mit einem oder mehreren Linien Kontakt haben, also stets auf schmale Zonen rauher Oberfläche treffen. Die Linien bzw. Linienzüge können entweder in Längs- oder in Querrichtung oder auch in beiden Richtungen verlaufen. Eine Kombination von längs- und querverlaufenden Linien bzw. Linienzügen erweist sich als besonders vorteilhaft, um bei schiebender oder ziehender Präparation dem Handstück einen besseren Widerstand entgegensetzen zu können. Es sei in diesem Zusammenhang darauf hingewiesen, daß der Begriff "quer" hier nicht im engen Sinne einer 90°-Anordnung zu den längs verlaufenden Linien bzw. Linienzügen zu verstehen ist.

Die quer und längs verlaufenden Linienzüge können vorteilhafterweise in sich geschlossen sein und eine geometrische Figur bilden ; vorteilhaft ist es, mehrere solcher geometrischer Figuren eng beieinanderliegend, vorzugsweise ineinandergreifend, anzuordnen. Die Linienzüge können gleichmäßig an der Oberfläche des Griffteils verteilt vorgesehen sein; ausreichend ist bereits eine Anordnung von Linien bzw. Linienzügen oder geometrischen Figuren an der Oberfläche zweier, vorzugsweise diametral einander gegenüberliegender Quadranten des Handstückes. Das Verfahren zur Aufbringung der Linien bzw. Linienzüge kann durch partielles Aufrauhen der Oberfläche mittels Laserstrahlen, durch Sandstrahlen oder durch Ätzen erfolgen.

Weitere Vorteile ergeben sich aus der nachfolgenden Beschreibung mehrerer Ausführungsbeispiele.

Es zeigen :

Figur 1 ein zahnärztliches Handstück gemäß der Erfindung in schaubildlicher Darstellung,

Figur 2 eine Prinzipdarstellung der Handstückhaltung im Bereich des Griffteils von vorne gesehen,

Figuren 3 bis 7 verschiedene Varianten einer Oberflächengestaltung gemäß der Erfindung.

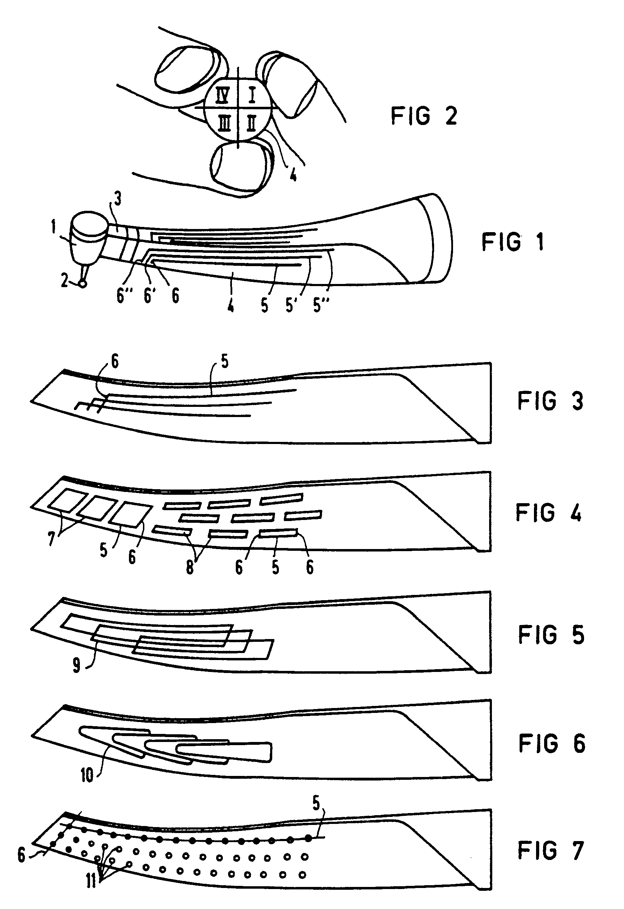

Die Figur 1 zeigt ein zahnärztliches Handstück mit einem Kopfgehäuse 1 zur Aufnahme eines rotierenden Werkzeuges 2. In bekannter Weise schließt sich an das Halsteil 3 ein mit 4 bezeichnetes Griffteil an, welches an seinem rückwärtigen Ende einen (nicht näher dargestellten) Anschluß für einen Versorgungsschlauch beinhalten kann. Nachdem diese Teile nicht Gegenstand der Erfindung sind, wird davon abgesehen, diese ausführlicher zu beschreiben.

Ein Handstück der dargestellten Art wird, wie in Figur 2 schematisch gezeigt, nach Art eines Bleistiftes gehalten, d.h. Daumen, Zeigefinger und Mittelfinger umfassen das Handstück im Griffbereich am Umfang an drei Stellen. Teilt man den Querschnitt des Griffteils in die vier Quadranten I bis IV ein, so ist eine Berührung der das Handstück umschließenden Finger an der Oberfläche aller vier Quadranten gegeben. Wird das Handstück nur mit zwei Fingern gehalten, was bei einer bestimmten Präparation ebenfalls vorkommen kann, so ist eine Berührung des Handstückes am Umfang wenigstens zweier Quadranten gegeben. Unter diesen Gesichtspunkten können die nachfolgend noch näher erläuterten verschiedenen Modifikationen einer griffgünstigen Gestaltung der Oberfläche an der Oberfläche zweier oder mehrerer Quadranten des Handstückes angeordnet sein.

Die griffige Oberfläche wird bei dem Ausführungsbeispiel nach Figur 1 gebildet durch mehrere, dicht nebeneinander angeordnete dünne Linien 5, 5', 5", ..., die dem Kopfgehäuse zugewandt in quer verlaufende Linien 6, 6', 6", ... übergehen und so mehrere Linienzüge 5, 6 ; 5', 6' ; ... bilden. Während bei der Ausführungsform nach Figur 1 diese Linienzüge dicht beieinander angeordnet sind, sich jedoch gegenseitig nicht berühren, überkreuzen sie sich bei der Ausführungsform nach Figur 3.

Die Figur 4 zeigt zwei Varianten, bei denen längs verlaufende Linien 5 zusammen mit quer verlaufenden Linien 6 geschlossene Linienzüge in Form von geometrischen Figuren 7, 8 bilden. Solche geschlossenen Linienzüge können, wie in Figur 4 links dargestellt, Rauten 7 oder, wie rechts daneben dargestellt, längs verlaufende Stäbchen 8 bilden. Vorteilhaft ist es, eine Vielzahl solcher geometrischer Figuren 7 bis 9 im Griffbereich anzuordnen, und zwar am Umfang wenigstens zweier, vorzugsweise diametral gegenüberliegender Quadranten vorzusehen. Die geometrischen Figuren können dabei — wie in Figur 4 gezeigt — nebeneinander oder, wie in den Figuren 5 und 6 dargestellt, ineinander geschachtelt angeordnet sein. Bei der Anordnung dieser Figuren ist zu beachten, daß die quer verlaufenden Linien 6 vorwiegend an dem dem Kopfgehäuse 1 zugewandten Ende des Griffteiles, in dem die Fingerhaltung besonders zum Tragen kommt, vorhanden sind.

Die Linien bzw. Linienzüge können auch unterbrochen sein und, wie in Figur 7 aufgezeigt, durch punktförmig aneinandergereihte Aufrauhungen 11 gebildet sein, die sowohl in Längsrichtung des Handstückes sich erstreckende als auch quer dazu verlaufende Linien bzw. Linienzüge 5 und 6 bilden. Wenngleich es möglich ist, die Linien bzw. Linienzüge bei metallischen Griffteilen durch Sandstrahlen oder Ätzen herzustellen, ist es besonders vorteilhaft, diese durch Aufrauhen der Oberfläche mittels Laserstrahlen zu erzeugen. Dies hat den besonderen Vorteil, daß man mit dem gleichen Verfahren auch Beschriftungen am Handstück vornehmen kann.

Es sei darauf hingewiesen, daß die Erfindung nicht auf die dargestellten Ausführungsformen beschränkt ist, daß es vielmehr denkbar ist, im Rahmen des Anspruchs 1 auch anders gestaltete Konturen bzw. Figuren auf dem Griffteil vorzusehen.

## Patentansprüche

1. Zahnärztliches Handstück, welches ein im Vergleich zur übrigen Oberfläche des Handstückes mit einer griffigen Oberfläche versehenes Griffteil (4) enthält, **dadurch gekennzeichnet,** daß die griffige Oberfläche durch eine Vielzahl von dünnen Linien (5) mit aufgerauhter Fläche gebildet wird, die sich in Längs- und/oder in Querrichtung des Handstückes erstrecken und in wenigstens zwei, vorzugsweise diametral liegenden Quadranten (I bis IV) am Umfang des Griffteils (4) angeordnet sind.

2. Zahnärztliches Handstück nach Anspruch 1, **dadurch gekennzeichnet,** daß die Linien (5) unterbrochen sind.

3. Zahnärztliches Handstück nach Anspruch 2, **dadurch gekennzeichnet,** daß die Linien (5) durch punktförmig aneinandergereihte Aufrauhungen (11) gebildet sind.

4. Zahnärztliches Handstück nach Anspruch 1, **dadurch gekennzeichnet,** daß in Längsrichtung des Handstückes verlaufende Linien (5) und quer dazu verlaufende Linien (6) miteinander verbunden sind und so Linienzüge bilden.

5. Zahnärztliches Handstück nach Anspruch 4, **dadurch gekennzeichnet,** daß die Linienzüge (5, 6) eine geschlossene geometrische Figur (7 bis 10) bilden.

6. Zahnärztliches Handstück nach Anspruch 5, **dadurch gekennzeichnet,** daß mehrere solcher geometrischer Figuren (7 bis 11) eng benachbart angeordnet sind.

7. Zahnärztliches Handstück nach Anspruch 6, **dadurch gekennzeichnet,** daß die geometrischen Figuren (9, 10) ineinandergreifend angeordnet sind.

8. Zahnärztliches Handstück nach einem der Ansprüche 1 bis 7, **dadurch gekennzeichnet,** daß die Linien bzw. Linienzüge (5, 6) gleichmäßig am Umfang verteilt an der Oberfläche des Griffteils angeordnet sind.

9. Zahnärztliches Handstück nach einem der Ansprüche 1 bis 8, **dadurch gekennzeichnet,** daß die Linien bzw. Linienzüge (5, 6) durch partielles Aufrauhen der Oberfläche mittels Laserstrahlen erzeugt werden.

10. Zahnärztliches Handstück nach einem der Ansprüche 1 bis 8, **dadurch gekennzeichnet, daß** die Linien bzw. Linienzüge durch partielles Sandstrahlen der Oberfläche des Handstückes gebildet sind.

11. Zahnärztliches Handstück nach einem der Ansprüche 1 bis 8, **dadurch gekennzeichnet, daß** die Linien bzw. Linienzüge durch partielles Ätzen der Oberfläche des Handstückes gebildet sind.

## Claims

1. A dental handpiece, which contains a grip part (4), provided with a grippable surface, in comparison to the remaining surface of the handpiece, characterised in that the grippable surface is formed by a plurality of thin lines (5) with a roughened surface, which lines extend in the longitudinal and/or transverse direction of the handpiece and are arranged in at least two, preferably diametrically opposed, quadrants (I to IV) on the periphery of the grip part (4).

2. A dental handpiece according to claim 1, characterised in that the lines (5) are interrupted.

3. A dental handpiece according to claim 2, characterised in that the lines (5) are formed by punctiform roughenings (11) in rows.

4. A dental handpiece according to claim 1, characterised in that lines (5), extending in the longitudinal direction of the handpiece, are connected to lines (6) extending transverse thereto and so form continuous lines.

5. A dental handpiece according to claim 4, characterised in that the continuous lines (5, 6) form a closed geometric figure (7 to 10).

6. A dental handpiece according to claim 5, characterised in that several such geometric figures (7 to 11) are arranged closely adjacent to each other.

7. A dental handpiece according to claim 6, characterised in that the geometric figures (9, 10) are arranged so that they interlock.

8. A dental handpiece according to one of claims 1 to 7, characterised in that the lines or continuous lines (5, 6) are evenly distributed over the periphery on the surface of the grip part.

9. A dental handpiece according to one of claims 1 to 8, characterised in that the lines or continuous lines (5, 6) are produced by partial roughening of the surface by means of laser beams.

10. A dental handpiece according to one of claims 1 to 8, characterised in that the lines or continuous lines are formed by partially sand-blasting the surface of the handpiece.

11. A dental handpiece according to one of claims 1 to 8, characterised in that the lines or continuous lines are formed by partial etching of the surface of the handpiece.

## Revendications

1. Pièce à main de dentisterie, qui comporte une partie de préhension (4) possédant, par rapport au reste de la surface de la pièce à main, une surface antidérapante, caractérisée par le fait que la surface antidérapante est formée par une multiplicité de lignes minces (5) possédant une surface rugueuse, qui s'étendent dans la direction longitudinale et/ou dans la direction transversale de la pièce à main et sont disposées dans au moins deux quadrants (I à IV), de préférence diamétralement opposés, sur le pourtour de la partie de préhension (4).

2. Pièce à main de dentisterie suivant la revendication 1, caractérisée par le fait que les lignes (5) sont interrompues.

3. Pièce à main de dentisterie suivant la revendication 2, caractérisée par le fait que les lignes (5) sont formées par des rugosités (11) disposées les unes à côté des autres sous la forme de points.

4. Pièce à main de dentisterie suivant la revendication 1, caractérisée par le fait que des lignes (5), qui s'étendent dans la direction longitudinale de pièces à main, et des lignes (6) transversales par rapport aux précédentes sont reliées entre elles et forment ainsi une configuration de lignes.

5. Pièce à main de dentisterie suivant la revendication 4, caractérisée par le fait que les configurations de lignes (5, 6) forment une figure géométrique fermée (7 à 10).

6. Pièce à main de dentisterie suivant la revendication 5, caractérisée par le fait que plusieurs figures géométriques de ce type (7 à 11) sont disposées très près les unes des autres.

7. Pièce à main de dentisterie suivant la revendication 6, caractérisée par le fait que les figures géométriques (9, 10) sont imbriquées les unes dans les autres.

8. Pièce à main de dentisterie suivant l'une des revendications 1 à 7, caractérisée par le fait que les lignes ou les configurations de lignes (5, 6) sont disposées en étant réparties uniformément sur le pourtour de la surface de la partie de préhension.

9. Pièce à main de dentisterie suivant l'une des revendications 1 à 8, caractérisée par le fait qu'on forme les lignes ou les configurations de lignes (5, 6) en rendant partiellement rugueuse la surface à l'aide de faisceaux laser.

10. Pièce à main de dentisterie suivant l'une des revendications 1 à 8, caractérisée par le fait qu'on forme les lignes ou les configurations de lignes au moyen d'une projection de sable sur une partie de la surface de la pièce à main.

11. Pièce à main de dentisterie suivant l'une des revendications 1 à 10, caractérisée par le fait qu'on forme les lignes et les configurations de lignes par corrosion partielle de la surface de la pièce à main.

FIG 2

FIG 1

FIG 3

FIG 4

FIG 5

FIG 6

FIG 7